# EUROPEAN PATENT APPLICATION

(11) **EP 4 494 792 A1**
(43) Date of publication of application: **22.01.2025**
(21) Application number: 23186588.2
(22) Date of filing: 20.07.2023
(51) Int. Cl.: B23C 5/10

(54) **END MILL TOOL**

(71) Applicant: Seco Tools AB, 737 82 Fagersta (SE)
(72) Inventor: ALSTERS, Rob, 811 81 Sandviken (SE)
(74) Representative: Sandvik

(57) **Abstract**

The present invention relates to an end mill tool for metal cutting comprising a cutting head (2), which is rotatable around a longitudinal axis (4) in a direction of rotation (6). The cutting head (2) comprises a plurality of cutting teeth (7), which each has a cutting edge formed at an intersection of a respective rake surface (8) and a respective clearance surface (9), and a plurality of chip flutes (13), which, rotationally in front of a respective one of the plurality of cutting teeth (7), each extends axially rearward from the front end (3), and which each has a respective helix angle α. The cutting edge of each of the plurality of cutting teeth (7) comprises at the front end (3), a front cutting edge (10) extending radially outward from a central region at the longitudinal axis (4) and a transition cutting edge (11) extending from the front cutting edge (10) to a side cutting edge (14). The clearance surface (9) of each of the cutting teeth (7) along the transition cutting edge (11), in a direction of the extension of the transition cutting edge (11), is convex. The rake surface (8) of each of the plurality of cutting teeth (7) has an axial rake angle β. Along the transition cutting edge (11), the axial rake angle β is positive, and equal or less than the helix angle α at the front end of the chip flute (13) which is rotationally in front thereof.

## Description

### Technical field

The present invention relates to a an end mill tool for metal cutting.

### Background

A wide range of components are machined from many different types of material, such as metal, composites or combinations thereof. Accordingly, a variety of different cutting tools, and in particular milling tools such as end mills, have been developed. Conventionally, an end mill comprises a plurality of cutting edges, which extend axially along the tool and radially along a front end of the tool. The teeth have front cutting edges that cut a surface in an axial forward feed direction, and side cutting edges that cut a surface in a radial feed direction. A front cutting edge, typically extends radially outward from a center of the tool toward a corner portion. The corner portion of the cutting edge connects the front cutting edge with the side cutting edge.

A problem with such known end mills is that the corner portion is prone to wear and damage such as notch wear and chipping.

### Summary

It is an object of the present invention to at least partly obviate the above mentioned problems. This object is achieved according to the invention by means of an end mill according to claim 1.

The present invention relates to an end mill tool for metal cutting comprising a body with a cutting head, which cutting head has a front end and a central longitudinal axis extending rearward from the front end, wherein the end mill tool is rotatable around the longitudinal axis in a direction of rotation, and wherein the cutting head comprises
- a plurality of cutting teeth, which each has a cutting edge formed at an intersection of a respective rake surface and a respective clearance surface, and
- a plurality of chip flutes, which, rotationally in front of a respective one of the plurality of cutting teeth, each extends axially rearward from the front end, and which each has a respective helix angle,
   wherein the cutting edge of each of the plurality of cutting teeth comprises
- at the front end, a front cutting edge extending radially outward from a central region at the longitudinal axis,
- a side cutting edge extending axially rearward from a radially outer region of the front end, and
- a transition cutting edge extending from the front cutting edge to the
   side cutting edge,
   wherein
- the clearance surface of each of the cutting teeth along the transition cutting edge, in a direction of the extension of the transition cutting edge, is convex, and
- the rake surface of each of the plurality of cutting teeth has an axial
   rake angle,
and wherein
along the transition cutting edge, the axial rake angle is
- positive, and
- equal or less than the helix angle at the front end of the chip flute which is rotationally in front thereof.

End mill tools, or in other words end milling tools, that have both an axially forward cutting front edge and a radially cutting side edge are usually provided with a chamfer at the transition of the front edge to side edge. The chamfer removes a sharp corner at the transition. Thereby, in prior art end mills, a new sharp corner is created on the front cutting edge at a small distance radially inward from the periphery. In the present end mill tool according to invention, thanks to the cutting edge, along the chamfer, having a rake surface with an axial rake angle that is less of equal to the helix angle of the front end of the chip flute at the transition, any new sharp corner due to the convex clearance surface is avoided. Thereby a transition cutting edge with a positive axial rake angle is made stronger to better withstand wear and chipping.

The present invention relates to an end mill tool for metal cutting. The end mill tool comprises a body with a cutting head. Optionally, the end mill tool is of a type wherein the cutting head is a one-piece integral unit with a shaft, sometimes called "solid round tools". Alternatively, the end mill tool is a exchangeable head and is connectable to a shaft. The shaft optionally has a coupling at the rear end. Thereby the cutting head is connectable to a machine spindle or to an adapter for a machine spindle. The machine spindle typically is part of a machine, for example a CNC machine. Preferably, the end mill tool comprises a wear resistant material such as for example coated or non-coated cemented carbide, cermet, ceramic or CBN.

The cutting head has a front end and a central longitudinal axis extending rearward from the front end, wherein the end mill is rotatable around the longitudinal axis in a direction of rotation. The cutting head defines a cutting circle with a cutting diameter. The cutting circle is to be understood as the circle formed by the radially most outer point of any of the cutting edges when the endmill is rotated one turn around the longitudinal axis without feeding the tool in any direction. The direction of rotation is the direction that the end mill tool is rotated during normal cutting operation.

According to an embodiment, the cutting head is elongated in the longitudinal direction. Optionally, the axial length of the cutting head is equal or smaller, preferably larger, than the diameter of the cutting circle.

The cutting head comprises a plurality of cutting teeth, which each has a cutting edge formed at an intersection of a respective rake surface and a respective clearance surface. For example, the cutting head comprises at least 2, preferably at least 4 cutting teeth. For example, the cutting head comprises at most 10, preferably at most 6 cutting teeth.

The cutting teeth are provided in the front end of the cutting head, which each extend radially outward from a central region at the longitudinal axis and each present a mainly axially forward cutting front cutting edge. Therein, optionally the front cutting edge of a specific cutting tooth extends from the longitudinal axis or a from a point a distance radially outward therefrom. Optionally, as seen in a front end view, the front cutting edge of a specific cutting tooth extends mainly along a radius or along a chord, wherein the cutting edge optionally is straight or curved. Optionally all front cutting edges extend from the same radial distance from the longitudinal axis, or, from different radial distances. For example, a number of the cutting edges start at a first, same radial distance and a number start at a second, same radial distance, which is different from the first radial distance. The front end of the cutting head preferably is an axially forwardly facing end surface of the end mill tool.

The cutting teeth continue axially rearward from a radially outer region of the front end and each present a mainly radially cutting side cutting edge. Preferably, the side cutting edges cut radially only. The teeth typically extend along a peripheral surface of the body of the cutting head. The side cutting edge of each of the cutting teeth extends with an angle to the longitudinal axis and preferably form a helix. The axial extension of the side cutting edge rearward from the front end is for example less than, equal to or longer than the cutting diameter, and preferably 1 - 5 times the cutting diameter. According to a preferred embodiment, the side cutting edges are continuous. Alternatively, the side cutting edges are interrupted by grooves. In applications, grooves are beneficial for reducing the breadth of cut chips, or for creating additional minor cutting edges.

The cutting head comprises a plurality of chip flutes, which, rotationally in front of a respective one of the plurality of cutting teeth, each extends axially rearward from the front end. The chip flutes typically extend along the peripheral surface of the body of the cutting head.

Each chip flute extends with an angle to the longitudinal axis and preferably forms a helix. The angle is denominated "helix angle" also for chip flutes that are angled without forming a helix and is to be understood as the angle between a bottom of the chip flute and the longitudinal axis. Preferably, the helix angle of a specific side cutting edge is equal to helix angle of the chip flute that is rotationally in front thereof. Optionally the helix angle of the chip flutes varies or is constant, for example, the helix angle decreases or increases axially rearward from the front end. According to an embodiment, the helix angle at the front end of the chip flute, which is rotationally in front of the transition cutting edge, is at least 10° and at most 60°, preferably, at least 20° and at most 50°. Within this range, the chip flutes provide satisfactory chip evacuation and/or chip breaking for most applications.

Each cutting edge of the plurality of teeth further comprises a transition cutting edge extending from the front cutting edge to the side cutting edge. Preferably, the transition cutting edge has a radially inner end at the front end connecting to the front cutting edge and an axially rear end connecting to the side cutting edge at an axial front end of the side cutting edge.

For example, the transition cutting edge extends over the radially outer corner where the peripheral side surface meets the front end surface of the cutting head body. Each chip flute has a front end, which is a portion of the chip flute that is located at the corner portion with the transition cutting edge.

The transition cutting edge extends at least partly along a chamfer in form of a clearance surface. The clearance surface of the translon cutting edge is convex in a direction of the extension of the transition cutting edge, i.e. in a radial direction along the front end. The convex curvature of the clearance surface can be seen in a plane that is normal to a tangent of a circle cut by a point on the transition cutting edge when the tool is rotated without feed. Preferably, as seen in the rotational direction behind the point on the transition cutting edge, i.e. along a portion of the circle cut by the point when the tool is rotated without feed, the clearance surface extends at a constant clearance angle.

Each rake surface of the cutting edges has an axial rake angle. The axial rake angle is to be understood as the inclination of the rake surface relative the longitudinal axis. The axial rake angle on a point of the cutting edge may be measured in a plane that is parallel with the longitudinal axis and that comprises a tangent to a circle cut by the point when the tool is rotated without feed.

Preferably, the axial rake angle along the side cutting edge is 0°.

Along the transition cutting edge, the axial rake angle is positive, and equal or less than the helix angle at the front end of the chip flute which is rotationally in front thereof. The axial rake angle is considered positive when the rake surface is inclined rotationally rearward in a direction axially rearward. According to an embodiment, along the transition cutting edge, the axial rake angle is maximally 10° less than the helix angle. Thereby it is ensured that the transition cutting edge is sufficiently smooth for most applications. For example, any corners are obtuse with having an angle of at least 170°. Preferably, the axial rake angle is chosen such that the transition cutting edge is continuously curved.

According to preferred embodiments, the front cutting edge comprises a central portion extending radially outward from the central region at the longitudinal axis, and a peripheral portion, extending radially outward from an inner end at the central portion to an outer end at the transition cutting edge.

Over the length of the peripheral portion, the axial rake angle transitions form the axial rake angle of the transition cutting edge at the outer end to the axial rake angle of the central portion at the inner end. Thereby the front cutting edge can be given any desired axial rake angle at the central portion without introducing sharp corners. Preferably, along the transition cutting edge (11), the axial rake angle β is constant. Thereby grinding of the axial rake angle is easier. Preferably, the transition of the axial rake angle of the peripheral portion is continuous. Thereby, the transition cutting edge and the peripheral portion of the front cutting edge are continuous, for example continuously curved or straight.

According to an embodiment, the axial rake angle of the central portion of the front cutting edge is constant. Thereby the grinding of the rake surface is easier. Preferably, the axial rake angle of the central portion of the front cutting edge is positive. For example, the axial rake angle is at least 5° and at most 30°. Large, positive rake angles provide a more pointed cutting edge which lowers cutting forces and heat generation. Smaller positive rake angles provide a blunter cutting edge, which is stronger an advantageous when cutting harder materials.

Preferably, the cutting head further comprises a web, wherein as seen in a front end view, the inner end of the peripheral portion of the front cutting edge is located at the intersection of the chip flute and the web. When grinding the rake surface in embodiments wherein the axial rake angle transitions along the peripheral portion of the front cutting edge, the grinding wheel is progressively tilted along the peripheral cutting edge. If the peripheral portion of the front cutting edge is outside of the web, such progressive tilting is easier as compared to griding inside the web. The space cut by the grinding wheel in the web is sometimes referred to as "gash".

According to an embodiment, as seen in a front end view, the inner end of the peripheral portion is located a radial distance of at least 25% and at most 30% of the cutting diameter from the cutting circle. It is easier to grind the changing rake surface at a distance from the center. The location of the inner end of the peripheral portion is also to the location of the outer end of the central portion of the front cutting edge.

According to an embodiment, as seen in a front end view, the outer end of the peripheral portion is located a radial distance of at least 37.5% and at most 42,5% of the cutting diameter from the longitudinal axis. Thereby it is ensured that the transition cutting edge with the constant axial rake angel according to the invention is sufficiently long to ensure a smooth transition and front cutting edge. The location of the outer end of the peripheral portion is also to the location of the inner end of the transition cutting edge.

According to embodiments, the end mill tool is square end mill tool, a chamfer end mill tool, a tapered end mill tool or a corner end mill tool. For example, a front end of the side cutting edge is located a distance of at most 5% of the cutting diameter axially rearward of a most forward front point of the cutting head. Optionally, the most forward point is a radially outer point of a cutting edge or a tool tip at the central longitudinal axis. The most forward point may also be any point on a front cutting edge without axial extension. For example, a corner radius of the transition cutting edge is less than 25% diameter of the cutting circle. The inventive axial rake angle of the transition cutting edge is especially advantageous for such tools. Due to a relative axially short corner portion of such tools, the transition edges with a small radius of curvature tend to be more prone to wear and chipping, especially at sharp corners introduced in the front cutting edge when gridding the chamfer/clearance surface.

The front cutting edges may in embodiments have an inclination relative the longitudinal axis so that they cut a short axial distance in addition to their mainly axially forward cutting direction. Optionally, two or more of the cutting edges meet in the axially most forward point forming a tip.

### Brief description of the drawings

In the following, example embodiments will be described in greater detail and with reference to the accompanying drawings, in which:
Fig. 1 is a perspective view of an embodiment of an end mill tool for metal cutting according to the invention;
Fig. 2 is a side view of the embodiment of the subject end mill;
Fig. 3 is an enlarged view of a forward end of the end mill tool sown in Fig. 2;
Fig. 4 is a front end view of the embodiment of the subject end mill;
Fig. 5 - 8 are cross sections over a front cutting edge as indicated in Fig. 4 showing an axial rake angle.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### Detailed description

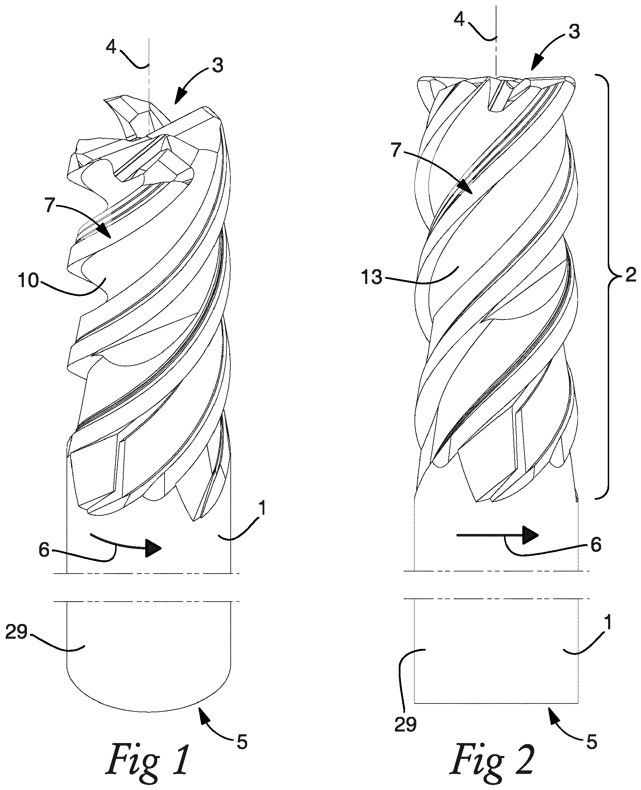

With reference to Figs. 1 - 8, an embodiment of the end mill in form of a square end mill tool is shown. The square end mill tool comprises a body 1, with a cutting head 2. The cutting head 2 has a front end 3, which is also the front end of the square end mill tool, and a central longitudinal axis 4 extending rearward from the front end 3. The front end 3 of the cutting head 2 is an axially forwardly facing end surface of the square end mill tool.

The axis 4 is the central longitudinal axis of the square end mill tool. The square end mill tool has a rear end 5 at the axially opposite end to the front end 3.

The cutting head comprises a plurality of cutting teeth 7, which each has a cutting edge formed at an intersection of a respective rake surface 8 and a respective clearance surface 9. The square end mill tool according to the embodiment comprises four cutting teeth 7.

The cutting edges each has radially most outer point at the same radial distance from the longitudinal axis 4. The cutting head 2 defines a cutting circle 12 formed by radially most outer points of the cutting edges when the square end mill tool is rotated one turn around the longitudinal axis 4 without being fed in any direction. The cutting circle 12 has a cutting diameter, which in the shown embodiment is 10 mm.

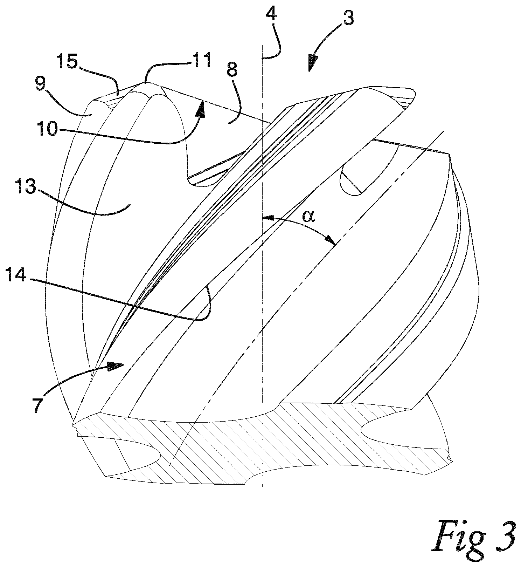

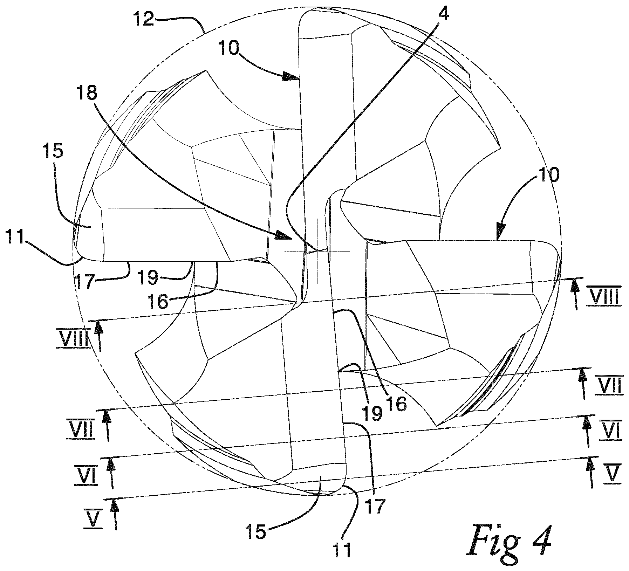

Each tooth 7 presents a mainly axially forward cutting front cutting edge 10, wherein each front cutting edge 10 extends radially outward from a central region at the longitudinal axis 4. Two of the front the cutting edges 10 start at a same, first radial distance close to longitudinal axis 4, and the other two of the four front cutting edges 10 start at a same, second radial distance from the longitudinal axis 4, wherein the second radial distance is larger than the first radial distance. Each of the four front cutting edges 10 extend at the side of the longitudinal axis 4 generally along a chord of the cutting circle 12. Each front cutting edge 10 is straight both when viewed in a front end vies and in a side view, c.f. Fig. 4 and 3, respectively.

Each tooth 7 continues axially rearward from a radially outer region of the front end 2 and presents a mainly only radially cutting side cutting edge 14, which extend axially rearward from the front end 3 along a peripheral surface of the body of the cutting head 2. The side cutting edge 14 of each of the cutting teeth 7 extends with an angle to the longitudinal axis and forms a helix.

The cutting head 2 comprises a plurality of chip flutes 13, which extend axially rearward from the front end 3 along a peripheral surface of the body of the cutting head 2. Each chip flute 13 extends rotationally in front of a respective one of the plurality of cutting teeth 7.

Each chip flute 13 forms a helix and extends with an angle in form of a helix angle α to the longitudinal axis 4. The helix angle α is measured as the angle between a bottom of the chip flute 13 and the longitudinal axis, c.f. Fig. 3. The helix angle of a side cutting edge 14 is equal to helix angle α of the chip flute that is rotationally in front thereof.

Each cutting edge of the plurality of teeth 7 further comprises a transition cutting edge 11, which extends over the radially outer corner where the peripheral side surface meets the front end surface of the cutting head 2, c.f. Fig. 4. Specifically, the transition cutting edge 11 has a radially inner end connecting to the front cutting edge 10 and an axially rear end connecting to the side cutting edge 14.

Each chip flute 13 has a front end, which is a portion of the chip flute that is located at the corner portion with the transition cutting edge. In the shown embodiment, the helix angle α is the same for all chip flutes 13, and also constant along the axial length including the front end. The helix angle α is 48°.

The transition cutting edge 11 extends at least partly along a chamfer 15 in form of a clearance surface 9. The clearance surface 15 of the translon cutting edge 11 is convex in a direction of the extension of the transition cutting edge 11, c.f. Fig. 3.

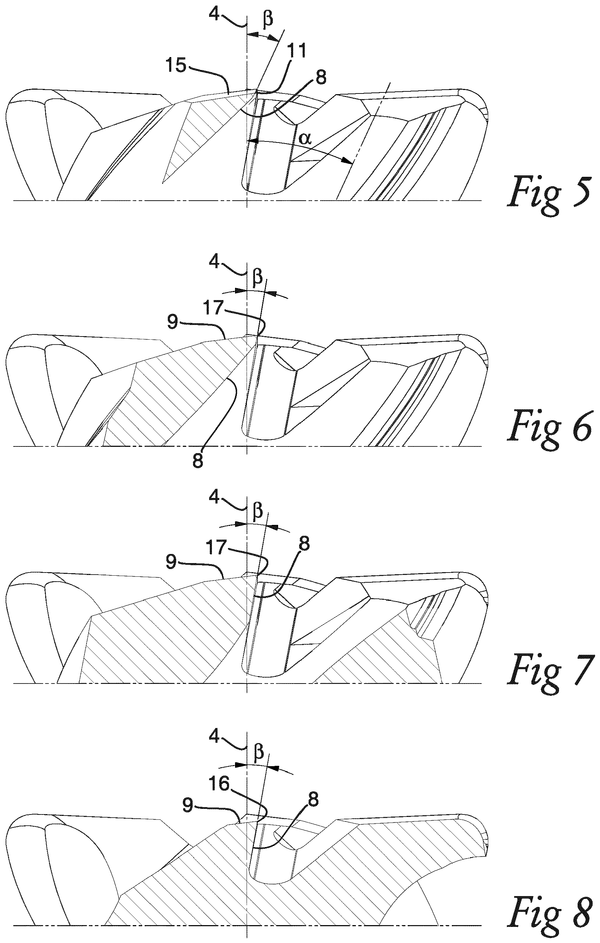

Each rake surface 8 of the cutting edges 10 has an axial rake angle β. The axial rake angle β is to be understood as the inclination of the rake surface 8 relative the longitudinal axis. The axial rake angle on a point of the cutting edge is measured in a plane that is parallel with the longitudinal axis and that comprises a tangent to a circle cut by the point when the tool is rotated without feed, c.f. the views of Figs. 5-8.

As can be seen in Fig. 5, along the transition cutting edge 11, the axial rake angle β is positive, and equal or less than the helix angle at the front end of the chip flute which is rotationally in front thereof. Specifically, in the shown embodiment, the axial rake angle β is 5° less than the helix angle and thus 43°. Preferably, the transition cutting edge 11 is continuously curved, c.f. Figs. 3 and 4.

Each front cutting edge 10 comprises a central portion 16 extending radially outward from the central region at the longitudinal axis 4, and a peripheral portion 17 extending radially outward from an inner end at the central portion 16 to an outer end at the transition cutting edge 11, c.f. Fig. 4.

As can be seen in Fig. 8, the axial rake angle β of the central portion 16 of the front cutting edge 10 is constant and in the shown embodiment 10°.

As can be seen in Figs. 6 and 7, over the length of the peripheral portion 17, the axial rake angle β transitions form the axial rake angle β of the transition cutting edge 11 at the outer end to the axial rake angle β of the central portion 16 of the front cutting edge 10 at the inner end. Thus, in the shown embodiment, the rake angle β transitions radially inward along the peripheral cutting edge 17 from 43° to 10°. The transition of the rake angle β along the peripheral portion 16 of the front cutting edge 10 is continuous.

The cutting head further comprises a web 18, wherein as seen in a front end view, the inner end of the peripheral portion 17 of the front cutting edge 10 is located at the intersection 19 of the chip flute 13 and the web 18. The inner end of the peripheral portion 17 is located a radial distance of 30% of the cutting diameter of the cutting circle 12 from the longitudinal axis 4. In the shown embodiment, this radial distance from the central longitudinal axis 4 to the inner end of the peripheral portion is 3mm. The location of the inner end of the peripheral portion 17 is also to the location of the outer end of the central portion 16 of the front cutting edge 10.

The outer end of the peripheral portion 17 is located a radial distance of 42,5% of the cutting diameter of the cutting circle 12 from the longitudinal axis 4.. In the shown embodiment, this radial distance from the central longitudinal axis 4 to the outer end of the peripheral portion is 4,25 mm. The location of the outer end of the peripheral portion 17 is also to the location of the inner end of the transition cutting edge 11.

The radial length of the transition cutting edge 11 is equal for all four front cutting edges 10. Also, the radial length of the peripheral portion 17 of the front cutting edge 10 is equal for all four front cutting edges 10. Two of the front cutting edges 10 have a shorter central portion 16 than the other two.

The cutting head 2, which as part of the square end mill tool, is rotatable around the longitudinal axis 4 in a direction of rotation 6, which is the direction of rotation when the square end mill tool is operated for normal cutting operation. Typically, the square end mill tool is operated for milling a surface at least partly limited by an approximately 90° thereto extending wall. During operation, the square end mill tool is rotated in the direction of rotation while being fed in a radial direction, and optionally in addition, in the axially forward direction.

The cutting head has an elongated extension along the longitudinal axis 4 and extends rearward from the front end is approximately 2 times the cutting diameter of the cutting circle 12. The rear end of the cutting head is the rear end of the side cutting edges 14. A front end of the side cutting edge 14 is located a distance of 3% of the cutting diameter axially rearward of a forwardmost front point of the cutting head 2. In the shown embodiment the axial distance from the most forward tip to the front end of the side cutting edge 14 is 0,3 mm. The forward most front point in the shown embodiment is any position on a front cutting edges 10.

The square end mill tool is of a type wherein the cutting head 2 is a one-piece integral unit with a shaft 19, which is connectable to a spindle of a CNC machine.

## Claims

1. An end mill tool for metal cutting comprising a body (1) with a cutting head (2), which cutting head (2) has a front end (3) and a central longitudinal axis (4) extending rearward from the front end (3), wherein the end mill tool is rotatable around the longitudinal axis (4) in a direction of rotation (6), and wherein the cutting head (2) comprises
- a plurality of cutting teeth (7), which each has a cutting edge formed at an intersection of a respective rake surface (8) and a respective clearance surface (9), and
- a plurality of chip flutes (13), which, rotationally in front of a respective one of the plurality of cutting teeth (7), each extends axially rearward from the front end (3), and which each has a respective helix angle α,
wherein the cutting edge of each of the plurality of cutting teeth (7) comprises
- at the front end (3), a front cutting edge (10) extending radially outward from a central region at the longitudinal axis (4),
- a side cutting edge (14) extending axially rearward from a radially outer region of the front end (3), and
- a transition cutting edge (11) extending from the front cutting edge (10) to the side cutting edge (14),
wherein
- the clearance surface (9) of each of the cutting teeth (7) along the transition cutting edge (11), in a direction of the extension of the transition cutting edge (11), is convex, and
- the rake surface (8) of each of the plurality of cutting teeth (7) has an axial rake angle β,
**characterized in that**
along the transition cutting edge (11), the axial rake angle β is
- positive, and
- equal or less than the helix angle α at the front end of the chip flute (13) which is rotationally in front thereof.

2. The end mill tool as claimed in claim 1, wherein, along the transition cutting edge (11), the axial rake angle β is maximally 10° less than the helix angle α.

3. The end mill tool as claimed in claim 1 or 2, wherein, along the transition cutting edge (11), the axial rake angle β is constant.

4. The end mill tool as claimed in any preceding claim, wherein the transition cutting edge (11) is continuously curved.

5. The end mill tool as claimed in any preceding claim, wherein the helix angle α at the front end of the chip flute (13) which is rotationally in front of the transition cutting edge (11) is at least 10° and at most 60°.

6. The end mill tool as claimed in any preceding claim, wherein
- the front cutting edge (10) comprises a central portion (16) extending radially outward from the central region at the longitudinal axis (4), and a peripheral portion (17), extending radially outward from an inner end at the central portion (16) to an outer end at the transition cutting edge (11), and
- the cutting head (2) defines a cutting circle (12) with a cutting diameter.

7. The end mill tool as claimed in claim 6, wherein, over the length of the peripheral portion (17), the axial rake angle β transitions form the axial rake angle β of the transition cutting edge (11) at the outer end to the axial rake angle β of the central portion (16) at the inner end.

8. The end mill tool as claimed in claim 6 or 7, wherein the transition of the axial rake angle β of the peripheral (17) portion is continuous.

9. The end mill tool claimed in any claim 6 - 8, wherein the axial rake angle β of the central portion (16) is constant.

10. The end mill tool as claimed in claim 9, wherein the axial rake angle β of the central portion (16) is positive, and at least 5° and at most 30°.

11. The end mill tool claimed in any claim 6- 10, wherein the cutting head (2) further comprises a web (18), wherein as seen in a front end view, the inner end of the peripheral portion (17) is located at the intersection of the chip flute (13) and the web (18).

12. The end mill tool claimed in any claim 6 - 11, wherein, as seen in a front end view, the inner end of the peripheral portion (17) is located a radial distance of at least 25% and at most 30% of the cutting diameter of the cutting circle from the longitudinal axis (4).

13. The end mill tool claimed in any claim 6 - 12, wherein, as seen in a front end view, the outer end of the peripheral portion (17) is located a radial distance of at least 37,5% and at most 42,5% of the cutting diameter from the longitudinal axis (4).

14. The end mill tool claimed in any preceding claim, wherein the end mill tool is a square end mill.

15. The end mill tool claimed in any claim 6 - 14, wherein a front end of the side cutting edge (14) is located a distance of at most 5% of the cutting diameter axially rearward of a forwardmost front tip of the cutting head (2).
